# EUROPEAN PATENT APPLICATION

(11) **EP 1 936 924 A1**
(43) Date of publication of application: **25.06.2008**
(21) Application number: 07123789.5
(22) Date of filing: 20.12.2007
(51) Int. Cl.: H04L 29/12

(54) **Method of setting up port of network printing device automatically and network printing device thereof**

(30) Priority: 22.12.2006 KR 20060132949
(71) Applicant: Samsung Electronics Co., Ltd., Suwon-si, Gyeonggi-do 442-742 (KR)
(72) Inventor: Lee, Jae-sung 115-3 Sancheok-ri, Gyeonggi-do (KR)
(74) Representative: Perkins, Dawn Elizabeth

(57) **Abstract**

A method of setting up a port of a network printing device automatically including determining whether a user inputs an internet protocol (IP) address of a host, and transmitting an IP address of the network printing device to the IP address of the host if the IP address of the host is inputted.

## Description

The present invention relate to a method of setting up a port of a network printing device automatically, and more particularly, to a method of setting up a port of a network printing device automatically even if a user does not know an internet protocol (IP) address of a preinstalled network printing device when installing a printing device driver to use the network printing device.

In a printing device, such as a printer, document data is printed after communicating with a computer, which writes the data. A driver of the printing device is installed in the computer to convert the document data written by the computer into data to be read by the printing device and transmitted thereto. Likewise, in a network printing device, a driver of the printing device, which corresponds to the type of the network printing device, is installed in the user's computer to use the network printing device.

The user sets up a port of the network printing device by installing the driver. The port is set up and added by searching for the network printing device within a network, checking an IP address of the network printing device, or searching for a domain name system (DNS) name.

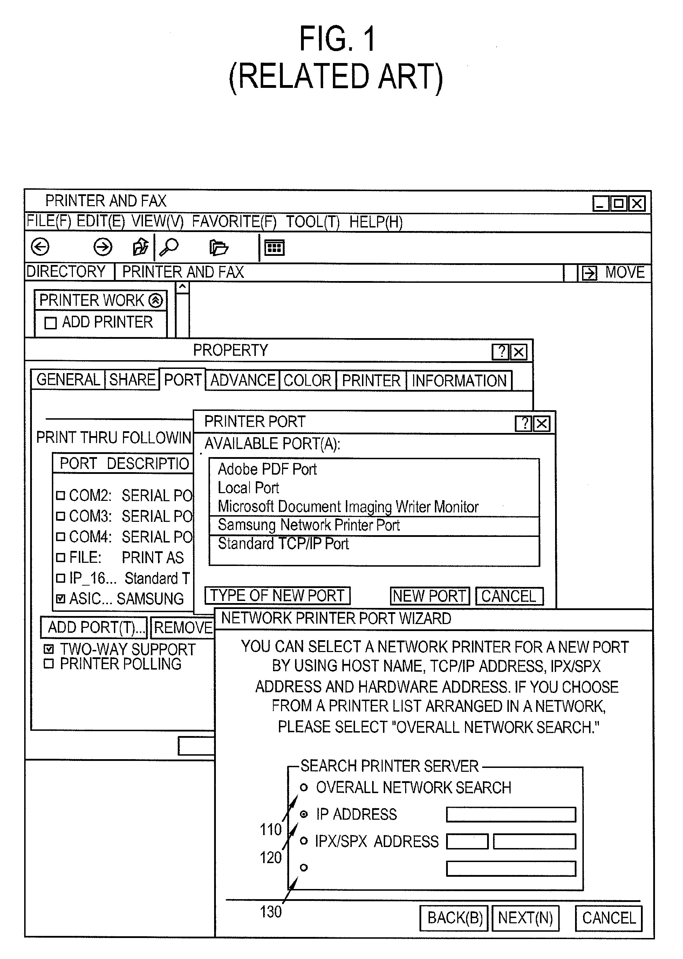

Figure 1 illustrates a screen to set up a conventional network printing device.
As illustrated in Figure 1, a port of the conventional network printing device is added by overall network search (110), direct input of an IP address (120) or input of a DNS name (130). If the overall network search 110 is selected, the user is required to wait as the overall network search 110 is executed, at which point, the new port may or may not be located. If the IP address 120 is selected, the user is required to know the IP address of the network printing device to be used. If the DNS name 130 is selected, the user is required to know the DNS name of the network printing device to be used.

Thus, the driver of the conventional network printing device cannot be installed if the user does not know the IP address or the DNS name of the preinstalled network printing device and may or may not be installed after a waiting period if the user selects to search an entire network.

The present invention provides a network printing device and a method of setting up a port of a network printing device automatically even if a user does not know an internet protocol (IP) address or a domain name system (DNS) name of a preinstalled network printing device.

The present invention also provides a network printing device and a method of setting up a port of a network printing device automatically even if a user does not know how to install a network driver, particularly how to add a port of a network printing device.

Additional aspects and utilities of the invention will be set forth in part in the description which follows and, in part, will be obvious from the description, or may be learned by practice of the present invention invention.

The foregoing and/or other aspects and utilities of the present invention may be achieved by providing a method of setting up a port of a network printing device automatically, the method comprising determining whether a user inputs an internet protocol address of a host, and transmitting an IP address of the network printing device to the internet protocol address of the host if the internet protocol address of the host is inputted.

The inputting of the internet protocol address of the host may comprise inputting the internet protocol address of the host through a control panel.
The method may further comprise transmitting setting information of the network printing device to the internet protocol address of the host if the internet protocol address of the host is inputted.

The setting information of the network printing device may comprise at least one of a paper size, a paper type, a direction of paper, a printing method, and a cassette information.

The foregoing and/or other aspects and utilities of the present invention may also be achieved by providing a method to set up a port of a network printing device automatically, the method comprising determining whether a signal is received from a host to install a driver of a printing device, and transmitting an internet protocol address of the network printing device to the internet protocol address of the host if the signal is received from the host to install the driver of the network printing device.

The signal may be received through a local area network to install the driver of the network printing device.

The method may further comprise transmitting setting information of the network printing device to the IP address of the host if the signal is received to install the driver of the printing device.

The setting information of the network printing device may comprise at least one of a paper size, a paper type, a direction of paper, a printing method, and a cassette information.

The foregoing and/or other aspects and utilities of the present invention may also be achieved by providing a network printing device connected to a host through a network, the network printing device comprising a user interface to receive an internet protocol address of the host from a user, a controller to transmit an internet protocol address of the network printing device to the internet protocol address of the host if it is determined that the IP address of the host is inputted, and a printing device interface to transmit the IP address of the network printing device to the IP address of the host.

The user interface may comprise a control panel.

The controller may transmit setting information of the network printing device to the internet protocol address of the host through the printing device interface if it is determined that the internet protocol address of the host is inputted.
The setting information of the network printing device may comprise at least one of a paper size, a paper type, a direction of paper, a printing method, and a cassette information.

The foregoing and/or other aspects and utilities of the present invention may also be achieved by providing a network printing device connected to a host through a network, the network printing device comprising a controller to transmit an internet protocol address of the network printing device to an internet protocol address of the host after determining whether a signal is received from the host to install a driver of the printing device, and a printing device interface to transmit the internet protocol address of the network printing device to the internet protocol address of the host by a control of the controller.

The signal may be received through a local area network to install the driver of the printing device.

The controller may transmit setting information of the network printing device to the internet protocol address of the host if it is determined that the internet protocol address of the host is inputted.

The setting information of the network printing device may comprise at least one of a paper size, a paper type, a direction of paper, a printing method, and a cassette information.

The foregoing and/or other aspects and utilities of the present invention may also be achieved by providing a network system, comprising a host to transmit printing data, and a network printing device connected to the host through a network, the network printing device having a user interface to receive an internet protocol address of the host from a user, a controller to transmit an internet protocol address of the network printing device to the internet protocol address of the host if it is determined that the internet protocol address of the host is inputted, and a printing device interface to transmit the internet protocol address of the network printing device to the internet protocol address of the host.

The host may receive the internet protocol address of the network printing device to install a driver according to the received internet protocol address.

The network printing device may transmit setting information including the internet protocol address, and the host sets up a port and installs a driver according to the setting information.

The host may generate a signal to the network printing device to install a driver of the network printing device, and the network printing device may transmit the internet protocol address according to the signal.

The foregoing and/or other aspects and utilities of the present invention may also be achieved by providing a computer-readable medium containing computer-readable codes as a program to execute a method of setting a port of a network printing device, the method comprising determining whether a user inputs an internet protocol address of a host, and transmitting an internet protocol address of the network printing device to the internet protocol address of the host if the internet protocol address of the host is inputted.

The foregoing and/or other aspects and utilities of the present invention may also be achieved by providing an interface to transmit a signal to an external network printing device to indicate a driver of the external network printing device, and a controller to set up a port of the network printing device and the driver according to setting information and an internet protocol address received in response to the signal.

The foregoing and/or other aspects and utilities of the present invention may also be achieved by providing a network printing device connected to the host through a network, the network printing device having a user interface to receive an internet protocol address of the host, a controller to transmit an internet protocol address of the network printing device to the internet protocol address of the host if it is determined that the internet protocol address of the host is inputted, and a printing device interface to transmit the internet protocol address of the network printing device to the internet protocol address of the host.

These and/or other aspects and utilities of the present invention will become apparent and more readily appreciated from the following description of the embodiments, taken in conjunction with the accompanying drawings of which:
Figure 1 illustrates a screen to set up a conventional network printing device;
Figure 2 illustrates an inner configuration of a network system according to an exemplary embodiment of the present invention;
Figure 3 is a flowchart to describe a method of automatically setting up a port of a network printing device according to the exemplary embodiment of the present invention; and
Figure 4 is a flowchart to describe a method of automatically setting up a port of a network printing device according to another exemplary embodiment of the present invention.

Reference will now be made in detail to the embodiments of the present invention, examples of which are illustrated in the accompanying drawings, wherein like reference numerals refer to the like elements throughout. The embodiments are described below in order to explain the present invention by referring to the figures.

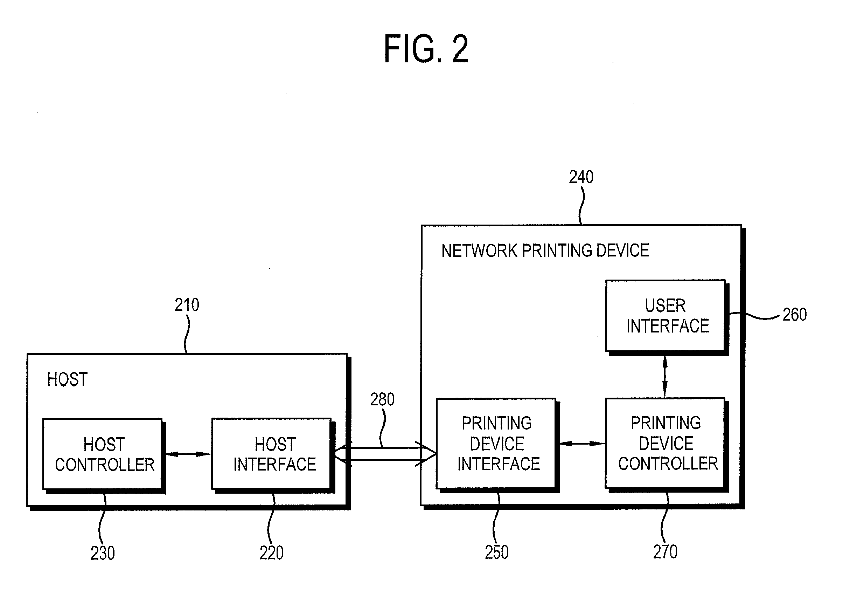

Figure 2 illustrates an inner configuration of a network system according to an exemplary embodiment of the present invention.

A network printing system may include at least one host computer 210 (hereinafter, to be referred to as "host 210") and a network printing device 240. In the exemplary embodiment, the single host 210 and the single network printing device 240 will be described.

The host 210 and the network printing device 240 may be connected with each other through a local area network (LAN) 280, a wired network, or a wireless network. The network printing device 240 receives printing data from the host 210 and performs a printing operation corresponding thereto.

The host 210 includes a host interface 220 and a host controller 230.
The host interface 220 is connected with a printing device interface 250 of the network printing device 240, and operates as a channel to transmit the printing data and information on the printing data between the host 210 and the network printing device 240. The host interface 220 may include a network interface card (NIC), which is not illustrated.

The host controller 230 controls the overall functions of the host 210 including the host interface 220.

The network printing device 240 includes the printing device interface 250, a user interface 260 and a printing device controller 270.

The printing device interface 250 is connected with the host interface 220 of the host 210, and operates as a channel to transmit the printing data and the printing data information between the host 210 and the network printing device 240. The printing device interface 250 may include a network interface card (NIC), which is not illustrated.

The user interface 260 is provided to facilitate interface with a user of the network printing device 240. The user may input an IP address of the host 210 through the user interface 260. According to the present invention, the user may input setting information of the network printing device 240 such as size, type, and direction of paper, a printing method and cassette information through the user interface 260. The user interface 260 may include a control panel, which is not illustrated.

The printing device controller 270 controls the overall functions of the network printing device 240 including the printing device interface 250 and the user interface 260.

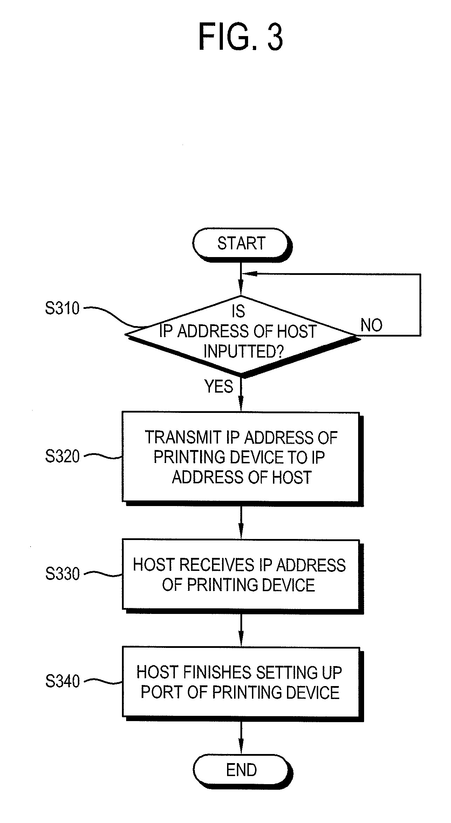

Figure 3 is a flowchart to describe a method of setting up a port of a network printing device automatically according to the exemplary embodiment of the present invention.

Referring to Figures 2 and 3, the printing device controller 270 determines whether the user inputs the IP address of the host 210 through the user interface 260 (operation S310). The user interface 260 may include a control panel connected to the printing device controller 270 to input not only the IP address of the host 210, but also the size, type and direction of paper, the printing method and the cassette information.

If the user inputs the setting information of the network printing device 240 as well as the IP address, the printing device controller 270 controls the printing device interface 250 to transmit the setting information of the network printing device 240 including the IP address of the network printing device 240 to the inputted IP address of the host 210. As described above, the printing device interface 250 may include a network interface card (NIC).

The printing device interface 250 transmits a signal having the setting information of the network printing device 240 as well as the IP address of the network printing device 240 to the host 210 (operation S320).

The signal is transmitted to the host 210 through the LAN 280, and the host 210 receives the transmitted signal through the host interface 220 (operation S330). As described above, the host interface 220 may include a network interface card (NIC). The host controller 230 sets up the port of the network printing device 240 with the setting information supplied to the host 210 (operation S340), and finishes installing a driver of the network printing device 240 when the driver is installed according to the setting information and the set up port. The driver installed in the host 210 can generate data to control the network printing device 240 to perform the printing operation to print an image on a printing medium. The driver may be a conventional printer driver.

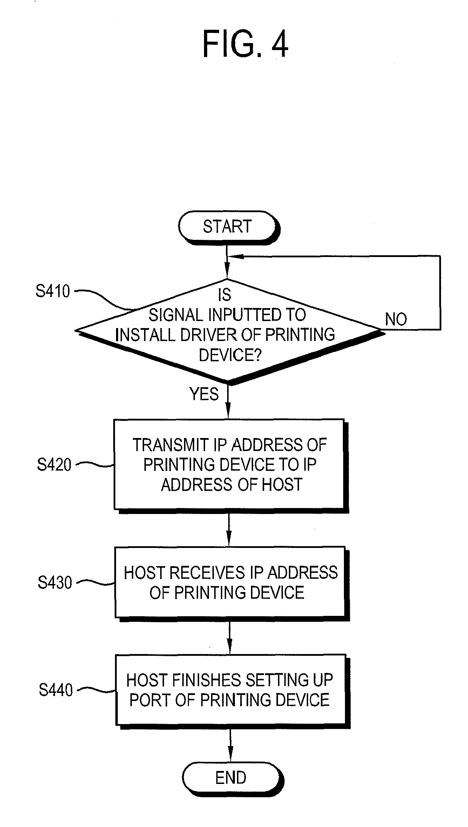

Figure 4 is a flowchart to describe a method to set up a port of a network printing device automatically according to another exemplary embodiment of the present invention.

The printing device controller 270 determines whether a signal is inputted through the printing device interface 250 to set up a driver of the network printing device 240 (operation S410). As described above, the printing device interface 250 may include a network interface card (NIC).

If the signal is inputted to set up the driver of the network printing device 240, the printing device controller 270 controls the printing device interface 250 to transmit the setting information of the network printing device 240 as well as the IP address of the network printing device 240 to the inputted IP address of the host 210.

The printing device interface 250 transmits a signal having the setting information of the network printing device 240 as well as the IP address of the network printing device 240 to the host 210 by the control of the host 210 (operation S420).

The signal is transmitted to the host 210 through the LAN 280, and the host 210 receives the transmitted signal through the host interface 220 (operation S430). As described above, the host interface 220 may include a network interface card (NIC). The host controller 230 sets up the port of the network printing device 240 with the information supplied to the host 210 (operation S440), and finishes installing the driver of the network printing device 240.

Various embodiments of the present invention can be embodied as computer readable codes on a computer-readable medium. The computer-readable medium includes a computer-readable recording medium and a computer-readable transmission medium. The computer readable recording medium may include any data storage device suitable to store data that can be thereafter read by a computer system. Examples of the computer readable recording medium include, but are not limited to, a read-only memory (ROM), a random-access memory (RAM), CD-ROMs, magnetic tapes, floppy disks, optical data storage devices, and carrier waves (such as data transmission through the Internet). The computer readable transmission medium can be distributed over network coupled computer systems, through wireless or wired communications over the internet, so that the computer readable code is stored and executed in a distributed fashion. Various embodiments of the present invention may also be embodied in hardware or in a combination of hardware and software.

As described above, the present invention provides a method of setting up a port of a network printing device automatically even if a user does not know an IP address or a DNS name of a preinstalled network printing device.
Also, the present invention provides a method of setting up a port of a network printing device automatically even if a user does not know how to install a network driver, particularly, how to add a port of the network printing device.

Although a few exemplary embodiments of the invention have been illustrated and described, it will be appreciated by those skilled in the art that changes may be made in these exemplary embodiments without departing the scope of the invention as defined in the appended claims.

## Claims

1. A method to set up a port of a network printing device (240) automatically, the method comprising:
receiving a set-up signal requesting set-up of the port of the network printing device (240);
determining an internet protocol address of a host (210) from the set-up signal; and
transmitting the internet protocol address of the network printing device (240) to the internet protocol address of the host (210).

2. The method according to claim 1, wherein the set-up signal comprises a user input including the internet protocol address of the host (210).

3. The method according to claim 2, wherein the inputting of the internet protocol address of the host comprises inputting the internet protocol address of the host through a control panel.

4. The method according to claim 1, wherein the set-up signal is a signal received from the host (210) to install a driver of a printing device (240).

5. The method according to claim 4, wherein the signal is received through a local area network (280) to install the driver of the network printing device (240).

6. The method according to any one of the preceding claims, further comprising:
transmitting setting information of the network printing device (240) to the internet protocol address of the host (210).

7. The method according to claim 6, wherein the setting information of the network printing device (240) comprises at least one of a paper size, a paper type, a direction of paper, a printing method, and a cassette information.

8. A network printing device (240) connected to a host (210) through a network (280), the network printing device (240) comprising:
a controller (270) configured to receive a set-up signal and determine an internet protocol address of a host (210) from the set-up signal; and
a printing device interface (250) configured to transmit the internet protocol address of the network printing device (240) to the internet protocol address of the host (210) which is determined by the controller (270).

9. The network printing device (240) according to claim 8, further comprising a user interface (260), wherein the set-up signal comprises a user input via the user interface (260) which includes the internet protocol address of the host (210).

10. The network printing device (240) according to claim 9, wherein the user interface (260) comprises a control panel.

11. The network printing device (240) according to claim 8, wherein the set-up signal is a signal received from the host to install a driver of the printing device.

12. The network printing device according to claim 11, wherein the signal is received through a local area network (280) to install the driver of the printing device (240).

13. The network printing device (240) according to any one of claims 8 to 12, wherein the controller (270) is configured to transmit setting information of the network printing device (240) to the internet protocol address of the host (210) through the printing device interface (250).

14. The network printing device (240) according to claim 13, wherein the setting information of the network printing device (240) comprises at least one of a paper size, a paper type, a direction of paper, a printing method, and a cassette information.

15. A network system, comprising:
a host (210) configured to transmit printing data; and
a network printing device (240) according to any one of claims 8 to 14.

16. The network system according to claim 15, wherein the host (210) is configured to receive the internet protocol address of the network printing device (240) and to install a driver according to the received internet protocol address.

17. A computer-readable medium containing computer-readable codes as a program to execute a method according to any one of claims 1 to 7.

18. A host (210) of a network system, comprising:
an interface (220) configured to transmit a signal to an external network printing device (240) to indicate a driver of the external network printing device (240); and
a controller (230) configured to set up a port of the network printing device (270) and the driver according to setting information and an internet protocol address received in response to the signal.
